# EUROPEAN PATENT APPLICATION

(11) **EP 2 487 267 A2**
(43) Date of publication of application: **15.08.2012**
(21) Application number: 10822307.4
(22) Date of filing: 06.10.2010
(51) Int. Cl.: C21C 5/52, C21C 7/00

(54) **METALLURGICAL FACILITY**

(30) Priority: 07.10.2009 RU 2009136947
(71) Applicant: Kudriashov, Vladimir Vasilievich, Moscow 117292 (RU); Chibisgulev, Aleksey Anatolievich, Moscow 117593 (RU); Roslavstov, Nikolay Andreyevich, Rostovskaya obl. 346370 (RU); Ivanov, Sergey Aleksandrovich, Moscow 107065 (RU); Dmitriyev, Roman Anatolievich, Moskovskaya obl. 143600 (RU)
(72) Inventor: Kudriashov, Vladimir Vasilievich, Moscow 117292 (RU); Chibisgulev, Aleksey Anatolievich, Moscow 117593 (RU); Roslavstov, Nikolay Andreyevich, Rostovskaya obl. 346370 (RU); Ivanov, Sergey Aleksandrovich, Moscow 107065 (RU); Dmitriyev, Roman Anatolievich, Moskovskaya obl. 143600 (RU)
(74) Representative: Andrae, Steffen
(86) International application number: PCT/RU2010/000560
(87) International publication number: WO 2011/043699

(57) **Abstract**

The invention relates to metallurgy and, more specifically, to iron-and-steel producing plants. The metallurgical complex is provided with three production platforms arranged one above the other. The middle platform is capable of rotating about a central axis and is provided with three identical lined containers situated in three positions at an angle of 120 ° to each other. The top platform is provided with means for melting metal and means for processing the melt capable of rising and lowering and installed on two adjacent lined containers to form steelmaking arc furnace positions and a melt processing unit position, respectively. The casting station is mounted on the bottom platform in the immediate vicinity of the lined container disposed in the third position. The invention provides high-level automation in the production of molten steel and cast blanks

## Description

The invention relates to metallurgy and can be used in the technology of production of steel products starting from steel melting and ending with output of rolled stock.

### Prior art technical background

Known in the art are steel production technological lines comprising interlinked steel melting crane and floor transport units, an out-of-furnace metallothermal section, and a casting section in the form of a continuous casting machine, in which steel teeming ladle cars are used as floor transport units (Certificate on useful model W 21198 of 02.10.2001, IPC C21C5/28, and Certificate on useful model No. 84848 of 04.05.2009, IPC C21C5/28).

These technological lines allow one to organize an integrated working cycle from melting of charging material till production of blanks.

The technological processes of melting, steel processing and steel teeming are difficult to be physically integrated in a single production plant. It is due to the fact that such installations as electrical melting furnaces, integrated processing plants, continuous casting stations and other metallurgical machines have been developed separately. In order to exclude breaks in the production structure, use is made of bridge cranes, steel-teeming ladles, intermediate ladles steel teeming ladle cars, etc. Their use compensates the breakdowns in the production cycle, but does not combine the installations into a single plant and creates problems in management of a steel-smelting enterprise.

Also known in the art are technological lines for production of metal rolled stock, comprising connected in series metallurgical assemblies of the steel melter and rolling mill interconnected transporting devices, units for processing the intermediate materials and units for treatment of intermediate products, in which the steel melter includes a melting furnace, out-of-furnace metal processing unit and a continuous casting station, wherein the melting furnace can be made in the form of a converter or an electric arc furnace (Certificate on useful model W-15673 of 07.09.2000, IPC B21 B1/4 6).

In this case transportation facilities are also used, in particular, steel teeming ladle cars that complicate the organisation of the process in an automatic mode thus reducing the production capacity.

Thus, the main disadvantage of the known plants is a significant loss of time and energy due to a long transportation path of the steel-teeming ladle between the electric furnace, the "furnace-ladle" machine, continuous casting machine (CCM) etc., an increase in the number of the working personnel servicing the bridge cranes, an increase of the danger at operation of transportation steel teeming ladles which are hanged up the hooks of the bridge cranes increase the cost of the main and auxiliary equipment due to applications of cranes and ladles, complexity in the organisation of the process in an automatic mode.

### Disclosure of the invention

The object of the claimed invention is to create a metallurgical complex allowing one to reduce loss of time and energy at work, to reduce the cost the equipment and personnel and to increase the reliability and safety of the whole complex.

This object is attained by creating a metallurgical complex including melting furnace, an out-of-furnace metal processing unit and a casting station, installed on technological platforms capable of receiving and transferring the molten metal with subsequent casting, characterized in that it is provided with three technological platforms installed one over another, the middle platform being capable of rotating about the central axis and is also provided with three identical lined containers situated in three positions at an angle of 120 ° to each other, the top platform being provided with means for melting metal and means for processing the melt capable of rising and lowering and installed on two adjacent lined containers to form steelmaking arc furnace positions and a melt processing unit positions, respectively, the casting station being mounted on the bottom platform in the immediate vicinity of the third position with a third lined container disposed therein.

The object of the invention is also attained due to the fact that the lined containers are capable of being inclined.

The object of the invention is also attained due to the fact that the metallurgical complex is provided with means for preheating the fusion mixture to be installed on a lined container disposed in the third position, which can be made in the form of a gas burner. The gas burner can be mounted on the lined container cover disposed in the third position.

The object of the invention is also attained due to the fact that the middle platform is installed on roller supports coupled to a rotary drive.

The object of the invention is also attained due to the fact that the metallurgical complex is provided with a matching device to control the rotation of the middle platform and movement by the devices for melting metal and melt processing.

The object of the invention is also attained due to the fact that the middle platform is made in the form of a ring, and metal melting and melt processing devices are made in the form of an electrode system and a lined dome.

### Brief description of the drawings

The invention is illustrated with the drawings (Figs. 1-4).
Fig. 1 illustrates disposition of the main units of the metallurgical complex in a plan view.
Fig. 2 is a sectional view along the line A-A with the following units: a melting furnace and a lined container for preheating the fusion mixture arranged from left to right in the initial position.
Fig. 3 is a sectional view along the line A-A with the following units: a melting furnace and a lined container for preheating the fusion mixture in the working position;
Fig. 4 is a sectional view along the line A-A with the following units: a lined container for preheating the fusion mixture and a unit for integrated steel processing from left to right in the working position.

### An embodiment of the invention

The metallurgical complex has three service levels and three working platforms. The top and platform 1 and a bottom platform 2 are stationary. The middle platform 3 is made in the form of a ring and is rotated by a drive (not shown) about the central axis 4. This platform 3 is supported by three trunnion stations 5 and provided with three horizontal movement stabilizers 6. Arranged on this platform 3 at an angle of 120° to each other are three lined containers 7, 8, 9 made capable of inclination.

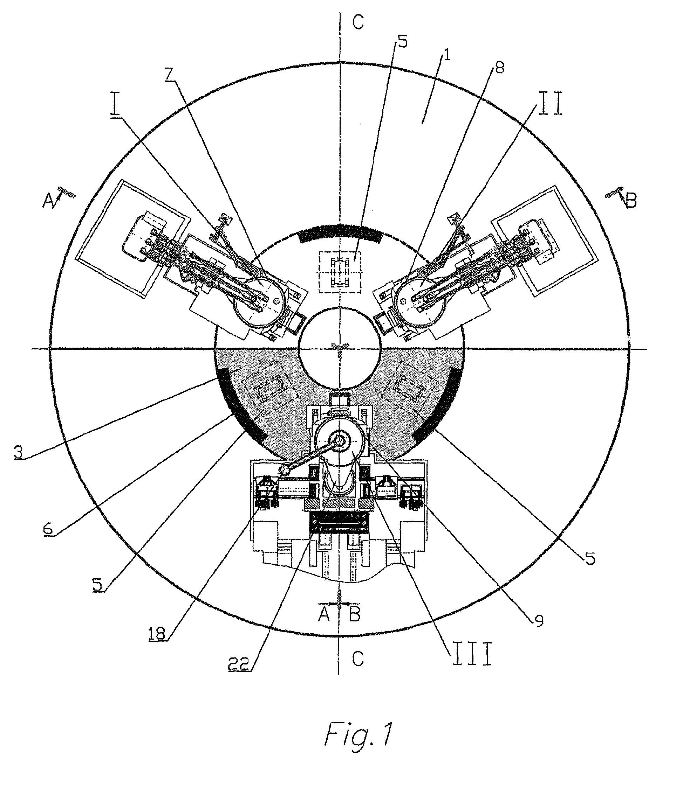

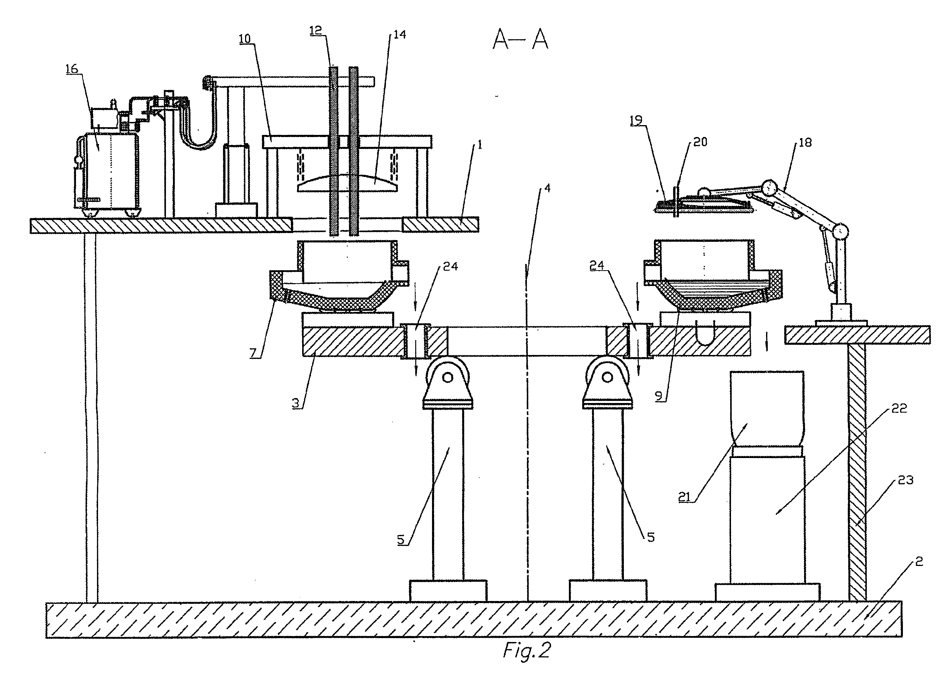

Their location is fixed at three positions I, II, III at an angle of 120°. At a starting point the container 9 is located in plan on the vertical C-C at the lower part of the circle (Fig. 1), and the first (container 7) and the second (container 8) parts are disposed at an angle of 120° to the left and to the right of the vertical C-C respectively. Arranged on the top stationary platform 1 are two portal cranes 10 and 11 with mechanisms for lifting electrodes 12 and 13 and domes 14 and 15 and mechanisms to control the electrodes 12 and 13, two furnace transformers 16 and 17 with a system to supply electric power to the electrodes 12 and 13 (Figs. 2-4).

Installed in position III is a console crane 18 with a cover 19, on which a gas burner 20 is secured. In this position the entire volume of melt is poured from the lined container into a metal receiver 21 of a steel pouring station 22 of a horizontal continuous casting machine or a machine with a low casting radius which are installed on the bottom stationary platform 2 (Figs. 2-4).

Fig. 1 illustrates a layout of the main technological equipment of the metallurgical complex. The top platform 1 made in the form of a semicircle overlapping positions I and II supports the portal crane 10 of an arc steel melting furnace SMF, a portal crane 11 of the integrated steel processing plant (SPP), the furnace transformer 16, the SPP transformer 17.

The platform 3 rests on three trunnion stations 5 and is made of modular steel structures (Figs. 2-4). To reduce the weight of the platform, apertures are made therein. The platform is rotated by a mechanical drive (not shown in the drawing).

Arranged on the bottom platform 2 at the zero mark is the steel pouring station 22 of the horizontal continuous casting machine with a metal receiver 21 and a support 23 for the console crane 18.

### Operation of the metallurgical complex

The metallurgical complex operates as follows. In the zero cycle (Fig. 2) i.e. at the beginning of operation of the complex, the lined container 9 being in position III is charged with a fusion mixture, closed with the cover 19, and the gas burner 20 is switched on to preheat the fusion mixture. The containers 7 and 8 are not yet loaded. After the fusion mixture in the container 9 has been heated up to a preset temperature, the heating is stopped, the cover 19 with the burner 20 is lifted, and the lined container 9 is transferred to position I by turning the platform 3 around 120°. In so doing the containers 7 and 8 also move and take positions II and III.

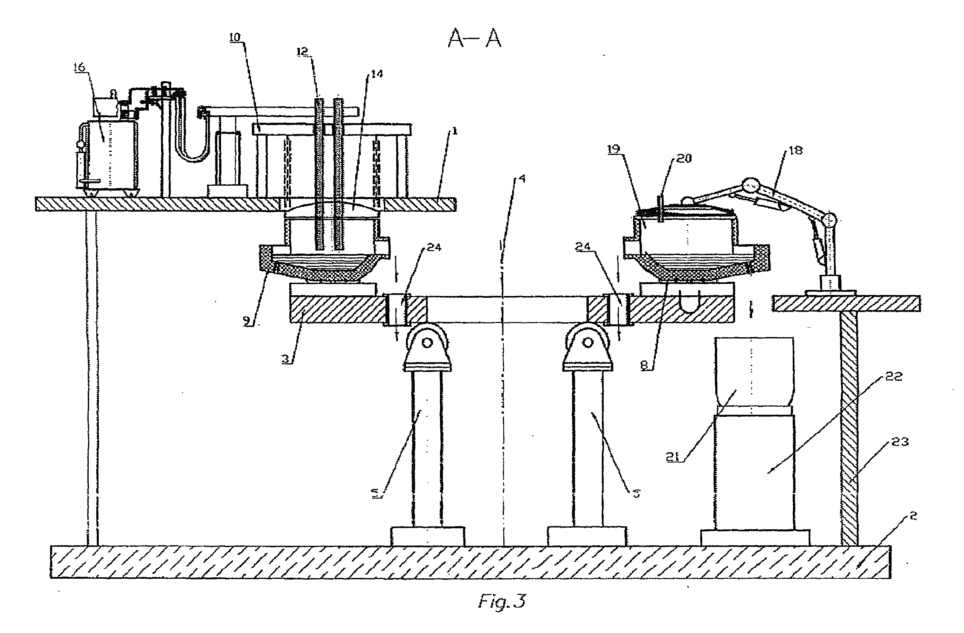

Then in position I the container 9 is covered with the portal crane 10 hanged up on chains, the dome 14 and electrodes 12, the SMF power supply is switched on and the preheated fusion mixture is melting down (Fig. 3). In so doing the container 7 in position II is not yet filled. Within the same cycle the container 8 is moved to position III, loaded with a portion of the fusion mixture, the cover 19 is lowered and the gas burner 20 is switched on to heat the new portion of the fusion mixture in the container 8 (Fig. 3). This takes place simultaneously with melting the first portion of the fusion mixture in position I of the container 9.

When in position I the melt in the container 9 is ready and in position III the fusion mixture in the container 8 is hot, the SMF and the burner 20 are switched off and the dome 14 with electrodes 12 and the cover 19 and the burner 20 is lifted up.

Then the platform 3 is again turned around 120°. After that the containers 7, 8, 9 are moved to positions III, I, II respectively. Then the dome 14 with the electrodes 12 is again lowered in position I and close the container 8, the dome 15 with electrodes 13 is set in position II and close the container 9, and in position III the cover 19 with the burner 20 covers the container 7 preloaded with the fusion mixture.

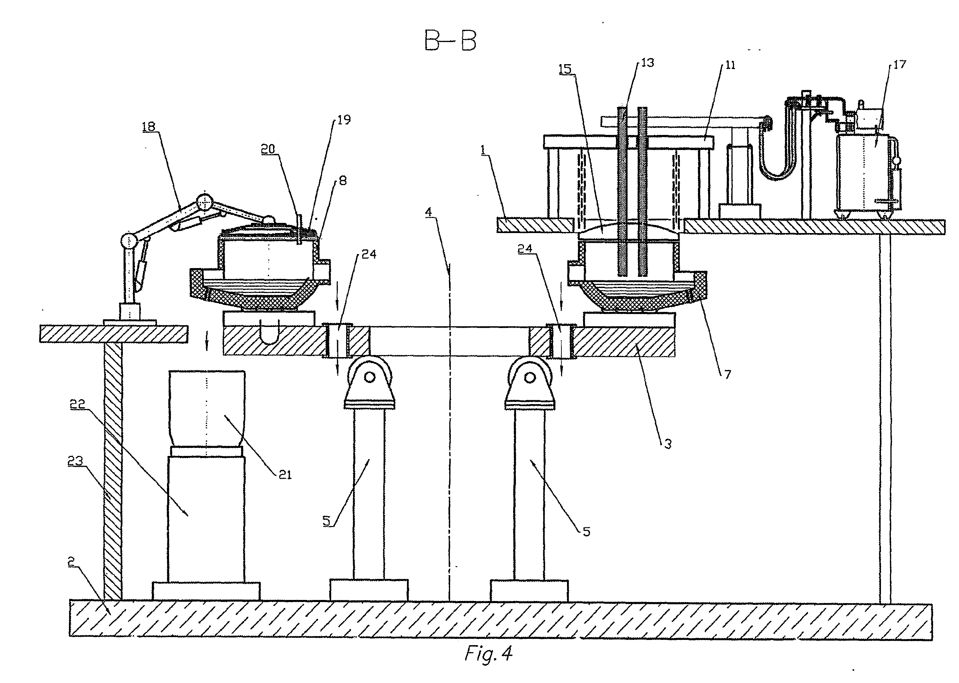

After that the power supply is connected to the SMF, the SPP to the burner and the metal in a SMF is melted in position I, the processing of the molten metal in the SPP is effected in position II, and the fusion mixture preheating is made in position III. After the next cycle, in which the platform is turned through the following 120° and the container 9 with the first portion of metal processed in the SPP arrives, it is discharged into the metal receiver 21 of the pouring station 22 of the horizontal continuous casting machine for producing blanks. Then fusion mixture is loaded again and the following cycle of preheating is started in position III, the melting in position I, the metal processing in position II and the metal pouring with subsequent loading of the fusion mixture for preheating in position III. After that all operations on preheating the fusion mixture, its melting, integrated processing and ingot pouring are made in positions III, I and II respectively. Fig.4 Illustrates the working moment of preheating the fusion mixture in the container 8 in position III and integrated processing of the molten metal in the container 7 in position II.

The slag removal is made by draining the metal processed in position II through the apertures 24 into the slag cup installed on the bottom platform 1. The slag cup is driven away by a special tractor or in another way.

The time of each cycle is calculated so that simultaneously with melting the fusion mixture in position I, the fusion mixture in position III would be already preheated to a required temperature, and the metal arrived at the SPP for processing would be already processed in position II. In this case all containers will be synchronously turned around for respective 120°. In so doing the time of pouring the metal, loading the fusion mixture and its preheating in position III strictly corresponds to the time of fusion and metal processing in positions I and II.

The control the process of turning the platform 3 and lowering and rising the domes and covers is performed by a matching device associated with the system of automatic control of the preheating, melting and processing processes (not shown in the drawing). This device includes a mechanism for turning the platform 3 after a preset time and generates a signal on rising or lowering of the domes, switching on/off the power supply for carrying out the processes of preheating the fusion mixture and steel melting and processing in positions I, II, III.

Thus, making the working platform 3 with a possibility of rotation provides transfer of the melting containers 7, 8, 9 under a cyclic schedule from one position to another through a certain time period during which a definite technological process is carried out in each container.

For the coordination of the working cycles of the SMF, the working capacity of the steel processing plant (SPP) and the continuous casting machines must be the same. The cycle time should correspond to the SMF operating time under load, the time of pouring of the molten steel from the container. To reduce the operating time of the SMF under load, in position I the fusion mixture is preheating in one of the three containers. Thus, at the initial step in position III the fusion mixture is additionally heated, in position I the container performs the SMF function, in the third position II the container performs the SPP function. The volume of the melting containers is designed for loading a single charge and conducting the process without additional charging. The control is performed from a single control panel.

### Industrial applicability

Due to a compact design and availability of the rotating platform with melting containers, as well as due to a discharge of the whole melt into the metal receiver of the melting machine, this metallurgical complex has no need in steel-teeming ladles and bridge cranes.

In this case it is possible to reduce a loss of time, energy consumption and material cost due to the absence of steel-teeming ladles and bridge cranes and a necessity of their servicing, as well as a reduction of the cost of the main and auxiliary equipment due to the exclusions of cranes and ladles, a continuous operating cycle is realizable. The claimed invention will find wide application in the iron and steel industry at construction of minifactories for production of metal rolled stock.

## Claims

1. A metallurgical complex comprising a melting furnace, an out-of-furnace metal processing unit and a casting station installed on technological platforms capable of receiving and transferring molten metal with subsequent casting, **characterized in that** it is provided with three technological platforms installed one over another, the middle platform being capable of rotating about the central axis, and is also provided with three identical lined containers situated in three positions at an angle of 120 ° to each other, the top platform being provided with means for melting metal and means for processing the melt capable of rising and lowering and installed on two adjacent lined containers to form steelmaking arc furnace positions and melt processing unit positions, respectively, the casting station being mounted on the lower platform in the immediate vicinity of the third position with a third lined container disposed therein.

2. The metallurgical complex as claimed in claim 1, **characterized in that** the lined containers are made with a possibility of their inclination.

3. The metallurgical complex as claimed in claim1, **characterized in that** it is provided with means for preheating the fusion mixture capable of being installed on a lined container disposed in the third position;

4. The metallurgical complex as claimed in 1 or claim 3, **characterized in that** the means for preheating the fusion mixture are made in the form of a gas burner.

5. The metallurgical complex as claimed in 1 or claim 3 or claim 4, **characterized in that** the gas burner is fixed on a cover to be installed on a lined container disposed in the third position.

6. The metallurgical complex as claimed in 1 **characterized in that** the middle platform is installed on a roller support station connected to a rotary drive.

7. The metallurgical complex as claimed in 1, **characterized in that** it is provided with a matching device to control the rotation of the middle platform and movement of the metal melting means and melt processing means.

8. The metallurgical complex as claimed in 1 **characterized in that** the middle platform is made in the form of a ring.

9. The metallurgical complex as claimed in claim1, **characterized in that** the metal melting means and melt processing means are made in the form of an electrode system and a lined dome.
